(19) Europäisches Patentamt / European Patent Office / Office européen des brevets

(11) **EP 3 268 191 B1**

(12) **EUROPEAN PATENT SPECIFICATION**

(45) Date of publication and mention
of the grant of the patent:
**06.12.2023  Bulletin 2023/49**

(21) Application number: **16714240.5**

(22) Date of filing: **09.03.2016**

(51) International Patent Classification (IPC):
*B27N 3/00* (2006.01)     *B27N 3/06* (2006.01)
*B27N 3/08* (2006.01)     *C08G 18/76* (2006.01)
*C08G 18/42* (2006.01)     *C09J 175/06* (2006.01)
*C08L 75/06* (2006.01)     *C08L 97/02* (2006.01)
*C08G 18/30* (2006.01)     *B32B 21/02* (2006.01)

(52) Cooperative Patent Classification (CPC):
(C-Sets available)
**B27N 3/002; C08G 18/302; C08G 18/4238;
C08G 18/7671; C08L 97/02; C09J 175/04**    (Cont.)

(86) International application number:
**PCT/EP2016/054990**

(87) International publication number:
**WO 2016/142409 (15.09.2016 Gazette 2016/37)**

(54) **BINDER COMPOSITION AND ITS USE IN PROCESSES FOR THE PRODUCTION OF WOOD FIBRE BOARDS**

BINDEMITTELZUSAMMENSETZUNG UND DEREN VERWENDUNG IN VERFAHREN ZUR HERSTELLUNG VON HOLZFASERPLATTEN

COMPOSITION DE LIANT ET SON UTILISATION DANS DES PROCÉDÉS POUR LA PRODUCTION DE PANNEAUX DE FIBRES DE BOIS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2015  IT CT20158426**

(43) Date of publication of application:
**17.01.2018  Bulletin 2018/03**

(73) Proprietor: **Novamont S.p.A.
28100 Novara (IT)**

(72) Inventors:
• **LOMBI, Roberto
I-28100 Novara (IT)**
• **TURATI, Daniele
I-20010 Buscate (IT)**
• **CASTANO, Lidia
I-28100 Novara (IT)**

(74) Representative: **Zanoli, Enrico et al
Zanoli & Giavarini S.p.A.
Via Melchiorre Gioia, 64
20125 Milano (IT)**

(56) References cited:
**EP-A1- 2 048 190      EP-A1- 2 821 446
EP-A2- 0 262 537      WO-A1-01/09261
WO-A1-2013/181580     AU-B1- 695 177
US-A- 2 897 166       US-A- 5 614 564
US-A1- 2007 243 782   US-A1- 2011 105 645**

**(Cont. next page)**

(52) Cooperative Patent Classification (CPC): (Cont.)

C-Sets
**C08L 75/04, C08L 23/06;**
**C08L 97/02, C08L 23/06, C08L 75/06**

C-Sets
**C08L 75/04, C08L 23/06;**
**C08L 97/02, C08L 23/06, C08L 75/06**

**Description**

This invention relates to a new binder composition and a process for using it for the production of new improved wood fibre boards.

Wood fibre boards are composite materials comprising a lignocellulose component and a binder component which are commonly used as a substitute for wood. Like wood, wood fibre boards have many applications extending from building to the furniture industry and in that respect have many advantages, such as for example lower cost, lower specific gravity, and improved resistance properties to external agents such as for example fungi and moulds. Different types of wood fibre boards which are primarily distinguished by the morphology of the lignocellulose component are available on the market. For example plywood boards are multilayer materials in which the lignocellulose component comprises superimposed layers of wood. Another type of wood fibre boards comprises chipboard, in which the lignocellulose component comprises chips of various size, typically resulting from the wastes from normal wood processing, which depending upon their particle size are generally known as particle boards, orientated strand boards or laminated wood fibre boards. A further type of wood fibre boards comprises those known as MDF boards, medium density fibre board, for the production of which the lignocellulose component is broken up by means of chemical and physical treatments of various kinds to obtain an extremely uniform and compact composite material.

The binder component ensures the structural unity of wood fibre boards. The binders currently in use comprise thermohardening resins which typically contain formaldehyde, for example urea-formaldehyde, melamine-formaldehyde, melamine-urea-formaldehyde, phenolformaldehyde and phenol-urea-formaldehyde resins. Although they make it possible to produce boards having satisfactory properties, use of these resins nevertheless implies many health and environmental problems associated with the use and release of formaldehyde.

In order to overcome this problem alternative binders which make it possible to limit, although not entirely eliminate, the use of resins containing formaldehyde in the production of wood fibre boards have been investigated for some time.

For example US2007/243782 describes the use of polyesters of the poly(butylene succinate) type as binders in wood fibre boards characterised by good flexibility and toughness properties EP 0 262 537 A2 discloses a composition comprising a polyester polyol and a polyisocyanate, which is used as binder for making wooden fibre boards.

So far the said alternative binders based on polyesters of the poly(butylene succinate) type have not however been able to effectively replace resins containing formaldehyde. This is because of the unsatisfactory mechanical properties of the boards obtained using them and their lesser resistance to water, and because of the low resistance of poly(butylene succinate) to hydrolysis, which results in deterioration of the boards over time.

There is therefore a need to identify new binder compositions capable of acting as alternative binders to resins containing formaldehyde for the production of wood fibre boards.

Starting from this technical problem it has now surprisingly been discovered that it is possible to overcome the problems mentioned above and obtain wood fibre boards characterised by mechanical properties, dimensional stability and water resistance comparable to or even better than those of ordinary boards obtained using resins containing formaldehyde through using a binder mixture comprising:

 i. 5-45% by weight, preferably 5-25%, with respect to the sum of components i.-vi., of at least one polyester comprising:

  a) a dicarboxylic component comprising, with respect to the total dicarboxylic component:

   a1) 0-80 % in moles, preferably 0-60% in moles, of units deriving from at least one aromatic dicarboxylic acid,
   a2) 20-100% in moles, preferably 40-100% in moles, of units deriving from at least one saturated aliphatic dicarboxylic acid,
   a3) 0-5 % in moles, preferably 0.1-1% in moles, more preferably 0.2-0.7% in moles, of units deriving from at least one unsaturated aliphatic dicarboxylic acid;

  b) a diol component comprising with respect to the total diol component:

   b1) 95-100 % in moles, preferably 97-100% in moles, of units deriving from at least one saturated aliphatic diol;
   b2) 0-5% in moles, preferably 0-3% in moles, of units deriving from at least one unsaturated aliphatic diol;

 ii. 0-6% by weight, preferably 2.5-4% by weight, with respect to the sum of components i.-vi., of at least one dihydroxyl compound having the formula $C_nH_{2n}(OH)_2$ in which "n" is from 2 to 14;
 iii. 10-55% by weight, preferably 12-45%, with respect to the sum of components i.-vi., of at least one cross-linking agent and/or a chain extender comprising at least one compound having two and/or multiple functional groups comprising isocyanate, peroxide, carbodiimide, isocyanurate, oxazoline, epoxy, anhydride or divinylether groups and mixtures thereof; wherein said agent iii. comprises at least 25 % by weight of at least one compound having two and/or multiple functional groups including isocyanate groups;

iv. 2-45% by weight, preferably 3-40%, with respect to the sum of components i.-vi., of at least one compound containing silicon preferably selected from (3-glycidyloxypropyl)trimethoxysilane, (3-isocyanatopropyl)triethoxysilane and organosilanes having at least one sulfur atom;

v. 0-60% by weight, preferably 30-55% by weight with respect to the sum of components i.-vi., of at least one thermoplastic polyolefin having a melting point $\leq 140°C$;

vi. 0-40% by weight with respect to the sum of components i.-vi. of water.

This invention also relates to a process for manufacturing a wood fibre board comprising the stages of:

a) preparing a homogeneous mixture by mixing:

  ◦ 5-20% by weight, preferably 7-18%, of the binder composition according to this invention;
  ◦ 80-95% by weight, preferably 82-93%, of wood fibre, this percentage being determined on the weight of the dry wood fibre;

b) applying a pressure of 40-100 kg/cm$^2$, preferably 60-80 kg/cm$^2$, and a temperature of 150-200°C, preferably 160-190°C, to the homogeneous mixture from stage a) for a time of less than 20 minutes, preferably between 1 and 15 minutes, more preferably between 5 and 15 minutes, in a mould, obtaining a pre-board;
c) releasing the pre-board in stage b) from the mould and cooling it to ambient temperature at atmospheric pressure for a time of less than 20 minutes, preferably between 5 and 15 minutes.

The wood fibre board which can be obtained through the process according to the invention shows mechanical and strength properties similar to those of similar boards manufactured using conventional resins containing formaldehyde and is characterised by an elastic modulus higher than 1700 MPa, preferably of 2200-3600 MPa, an ultimate tensile stress of 20-35 MPa, deformation of 1-2% on fracture measured in accordance with standard UNI EN 310:1994 using 2 cm wide test coupons with a length/thickness ratio = 15, together with dimensional stability and water resistance of < 50%, measured as swelling in water after 24 hours according to standard EN 317:1994, the said values relating to wood fibre boards having a thickness of approximately 9-10 mm and a density within the range from 650 to 975 kg/m$^3$, preferably 800-900 kg/m$^3$.

As far as the polyesters of the binder mixture according to this invention are concerned, these comprise a dicarboxylic component which comprises, with respect to the total dicarboxylic component, 0-80% in moles, preferably 0-60% in moles, of units deriving from at least one aromatic dicarboxylic acid and 20-100% in moles, preferably 40-100% in moles of units deriving from at least one saturated aliphatic dicarboxylic acid and 0-5% in moles, preferably 01-1% in moles, more preferably 0.2-0.7% in moles, of units deriving from at least one unsaturated aliphatic dicarboxylic acid.

The aromatic dicarboxylic acids are preferably selected from aromatic dicarboxylic acids of the phthalic acid type, preferably terephthalic acid or isophthalic acid, more preferably terephthalic acid, and heterocyclic dicarboxylic aromatic compounds, preferably 2,5-furandicarboxylic acid, 2,4-furandicarboxylic acid, 2,3-furandicarboxylic acid, 3,4-furandicarboxylic acid, more preferably 2,5-furandicarboxylic acid, their esters, their salts and mixtures thereof. In a preferred embodiment the said aromatic dicarboxylic acids comprise:

- from 1 to 99% in moles, preferably from 5 to 95% and more preferably from 10 to 80%, of terephthalic acid, its esters or its salts;
- from 99 to 1% in moles, preferably from 95 to 5% and more preferably from 90 to 20%, of 2,5-furandicarboxylic acid, its esters or its salts.

The saturated aliphatic dicarboxylic acids are preferably selected from $C_2$-$C_{24}$ saturated dicarboxylic acids, preferably $C_4$-$C_{13}$, more preferably $C_4$-$C_{11}$, their $C_1$-$C_{24}$, preferably $C_1$-$C_4$, alkyl esters, and mixtures thereof. Preferably the saturated aliphatic dicarboxylic acids are selected from: succinic acid, 2-ethylsuccinic acid, glutaric acid, 2-methylglutaric acid, adipic acid, pimelic acid, suberic acid, azelaic acid, sebacic acid, undecandioic acid, dodecandioic acid, brassylic acid and their $C_{1-24}$ alkyl esters. In a preferred embodiment of this invention the saturated aliphatic dicarboxylic acid comprise mixtures comprising at least 50% in moles, preferably more than 60% in moles, more preferably more than 65% in moles, of succinic acid, adipic acid, azelaic acid, sebacic acid, brassylic acid, their $C_1$-$C_{24}$, preferably $C_1$-$C_4$, esters and mixtures thereof.

The unsaturated aliphatic dicarboxylic acids are preferably selected from itaconic acid, fumaric acid, 4-methylene pimelic acid, 3,4-bis(methylene) nonandioic acid, 5-methyl-nonandioic acid, their $C_1$-$C_{24}$, preferably $C_1$-$C_4$, alkyl

esters, their salts and mixtures thereof. In a preferred embodiment of this invention the unsaturated aliphatic dicarboxylic acids comprise mixtures comprising at least 50% in moles, preferably more than 60% in moles, more preferably more than 65% in moles of itaconic acid, its $C_1$-$C_{24}$, preferably $C_1$-$C_4$, esters. More preferably the unsaturated aliphatic dicarboxylic acids comprise itaconic acid.

The diol component of the polyesters in the binder mixture according to this invention comprises, with respect to the total diol component, 95-100% in moles, preferably 97-100% in moles, of units deriving from at least one saturated aliphatic diol and 0-5% in moles, preferably 0-3% in moles, with respect to the total diol component, of units deriving from at least one unsaturated aliphatic diol. In a preferred embodiment the diol component of the polyesters of the binder mixture according to this invention comprises saturated aliphatic diols.

As far as the saturated aliphatic diols are concerned, these are preferably selected from 1,2-ethandiol, 1,2-propandiol, 1,3-propandiol, 1,4-butandiol, 1,5-pentandiol, 1,6-hexandiol, 1,7-heptandiol, 1,8-octandiol, 1,9-nonandiol, 1,10-decandiol, 1,11-undecandiol, 1,12-dodecandiol, 1,-13-tridecandiol, 1,4-cyclohexandimethanol, neopentylglycol, 2-methyl-1,3-propandiol, dianhydrosorbitol, dianhydromannitol, dianhydroiditol, cyclohexandiol, cyclohexanmethandiol, dialkylene glycols and polyalkylene glycols having a molecular weight of 100-4000 such as for example polyethylene glycol, polypropylene glycol and mixtures thereof. Preferably the diol component comprises at least 50% in moles of one or more diols selected from 1,2-ethandiol, 1,3-propandiol, 1,4-butandiol. More preferably the diol component comprises or consists of 1,2-ethandiol , 1,4-butandiol or mixtures thereof.

As far as the unsaturated aliphatic diols are concerned, these are preferably selected from cis 2-butene-1,4-diol, trans 2-butene-1,4-diol, 2-butyne-1,4-diol, cis 2-pentene-1,5-diol, trans 2-pentene-1,5-diol, 2-pentyne-1,5-diol, cis 2-hexene-1,6-diol, trans 2-hexene-1,6-diol, 2-hexyn-1,6-diol, cis 3-hexene-1,6-diol, trans 3-hexene-1,6-diol, 3-hexyn-1,6-diol.

As far as the polyesters of the binder mixture are concerned, these are preferably selected from aliphatic polyesters ("AP") and aliphatic-aromatic polyesters ("AAPE").

In the meaning of this invention, by aliphatic polyesters AP are meant polyesters comprising a dicarboxylic component which comprises 95-100% in moles with respect to the total moles of dicarboxylic component of at least one saturated aliphatic dicarboxylic acid and 0-5% in moles of at least one unsaturated aliphatic dicarboxylic acid and a diol component comprising 95-100% in moles with respect to the total moles of diol component of units deriving from at least one saturated aliphatic diol and 0-5% in moles of units deriving from at least one unsaturated aliphatic diol.

By AAPE polyesters, in this invention are meant polyesters comprising a dicarboxylic component comprising at least one dicarboxylic aromatic compound, at least one saturated aliphatic dicarboxylic acid and 0-5% in moles with respect to the total moles of dicarboxylic component of at least one unsaturated aliphatic dicarboxylic acid and a diol component comprising 95-100% in moles with respect to the total moles of diol component of units deriving from at least one saturated aliphatic diol and 0-5% in moles of units deriving from at least one unsaturated aliphatic diol.

In the case of AP aliphatic polyesters, those preferred are polyesters in which the dicarboxylic component comprises units deriving from at least one $C_2$-$C_{24}$, preferably $C_4$-$C_{13}$, more preferably $C_4$-$C_{11}$ saturated aliphatic dicarboxylic acid, their $C_1$-$C_{24}$, preferably $C_1$-$C_4$, alkyl esters, their salts and mixtures thereof and a diol component comprising units deriving from at least one saturated aliphatic diol, preferably selected from 1,2-ethandiol, 1,2-propandiol, 1,3-propandiol, 1,4-butandiol.

In a preferred embodiment of this invention polyester i. of the binder mixture comprises at least one aliphatic polyester (AP), preferably poly(1,4-butylene succinate), poly(1,4-butylene adipate), poly(1,4-butylene azelate), poly(1,4-butylene sebacate), poly(1,4-butylene adipate-co-1,4-butylene succinate), poly(1,4-butylene azelate-co-1,4-butylene succinate), poly(1,4-butylene sebacate-co-1,4-butylene succinate), poly(1,4-butylene succinate-co-1,4-butylene adipate-co-1,4-butylene azelate). In a particularly preferred embodiment the said aliphatic polyester is poly(1,4-butylene succinate).

In a further preferred embodiment of this invention the polyester in the binder mixture comprises at least one aliphatic-aromatic polyester (AAPE) and is advantageously selected from:

(A) polyesters comprising repetitive units deriving from aromatic dicarboxylic acids of the phthalic acid type, preferably terephthalic acid, aliphatic dicarboxylic acids and aliphatic diols (AAPE-A), characterised by an aromatic units content of 35-60% in moles, preferably between 40-55% in moles with respect to the total moles of dicarboxylic components. The AAPE-A polyesters are preferably selected from: poly(1,4-butylene adipate-co-1,4-butylene terephthalate), poly(1,4-butylene sebacate-co-1,4-butylene terephthalate), poly(1,4-butylene azelate-co-1,4-butylene terephthalate), poly(1,4-butylene brassylate-co-1,4-butylene terephthalate), poly(1,4-butylene succinate-co-1,4-butylene terephthalate), poly(1,4-butylene adipate-co-1,4-butylene sebacate-co-1,4-butylene terephthalate), poly(1,4-butylene azelate-co-1,4-butylene sebacate-co-1,4-butylene terephthalate), poly(1,4-butylene adipate-co-1,4-butylene azelate-co-1,4-butylene terephthalate), poly(1,4-butylene succinate-co-1,4-butylene sebacate-co-1,4-butylene terephthalate), poly(1,4-butylene adipate-co-1,4-butylene succinate-co-1,4-butylene terephthalate). poly(1,4-butylene azelate-co-1,4-butylene succinate-co-1,4-butylene terephthalate).

(B) polyesters comprising repetitive units deriving from heterocyclic dicarboxylic aromatic compounds, preferably 2,5-furandicarboxylic acid, aliphatic dicarboxylic acids and aliphatic diols (AAPE-B), characterised by an aromatics unit content of between 5-80% in moles, preferably between 6-75% in moles, with respect to total moles of the dicarboxylic component. The AAPE-B polyesters are preferably selected from: poly(1,4-butylene adipate-co-1,4-butylene 2,5-furandicarboxylate), poly(1,4-butylene sebacate-co-1,4-butylene 2,5-furandicarboxylate), poly(1,4-butylene azelate-co-1,4-butylene 2,5-furandicarboxylate), poly(1,4-butylene brassylate-co-1,4-butylene 2,5-furandicarboxylate), poly(1,4-butylene succinate-co-1,4-butylene 2,5-furandicarboxylate), poly(1,4-butylene adipate-co-1,4-butylene sebacate-co-1,4-butylene 2,5-furandicarboxylate), poly(1,4-butylene azelate-co-1,4-butylene sebacate-co-1,4-butylene 2,5-furandicarboxylate), poly(1,4-butylene adipate-co-1,4-butylene azelate-co-1,4-butylene 2,5-furandicarboxylate), poly(1,4-butylene succinate-co-1,4-butylene sebacate-co-1,4-butylene 2,5-furandicarboxylate), poly(1,4-butylene adipate-co-1,4-butylene succinate-co-1,4-butylene 2,5-furandicarboxylate), poly(1,4-butylene azelate-co-1,4-butylene succinate-co-1,4-butylene 2,5-furandicarboxylate).

In addition to the dicarboxylic component and the diol component the polyesters of the binder mixture according to this invention preferably comprise repetitive units deriving from at least one hydroxy acid in a quantity of between 0-49%, preferably 0-30% in moles with respect to the total moles of dicarboxylic component. Examples of convenient hydroxy acids are glycolic acid, hydroxybutyric acid, hydroxycaproic acid, hydroxyvaleric acid, 7-hydroxyheptanoic acid, 8-hydroxycaproic acid, 9-hydroxynonanoic acid, lactic acid or lactides. The hydroxy acids may be inserted in the chain as such or may also be first caused to react with diacids or diols.

Long molecules with two functional groups including functional groups which are not in the terminal position may also be present in quantities not exceeding 10% in moles with respect to the total moles of dicarboxylic component. Examples are dimer acids, ricinoleic acid and acids having epoxy functional groups and also polyoxyethylenes having a molecular weight between 200 and 10,000.

Diamines, amino acids and amino alcohols may also be present in percentages up to 30% in moles with respect to the total moles of dicarboxylic component.

During preparation of the polyesters of the binder mixture according to this invention one or more molecules having multiple functional groups may also advantageously be added in quantities of between 0.1 and 3% in moles with respect to the total moles of dicarboxylic component (and any hydroxy acids) in order to obtain branched products. Examples of these molecules are glycerol, pentaerythritol, trimethylolpropane, citric acid, dipentaerythritol, acid triglycerides and polyglycerols.

The molecular weight Mn of the polyesters of the binder mixture according to this invention is preferably $\leq$ 80000, preferably $\leq$ 60000. Excessively high molecular weights in fact make homogeneous dispersion of the polyester difficult. On the other hand the polymer structure of the polyester allows the mixture to exert its binding action and therefore polyesters having a molecular weight Mn $\geq$ 5000, preferably $\geq$ 20000, are preferred. In a particularly preferred embodiment the molecular weight Mn of the polyesters of the binder mixture according to this invention preferably lies between 5000 and 80000, preferably between 20000 and 60000. As far as the polydispersity index of the molecular weights Mw/Mn is concerned, this instead preferably lies between 1.5 and 10, more preferably between 1.6-5 and even more preferably between 1.8-2.7.

The molecular weights $M_n$ and $M_w$ may be measured by Gel Permeation Chromatography (GPC). The determination may be performed with the chromatography system held at 40°C using a set of three columns in series (particle diameter 5 $\mu$ and porosities of 500 A, 10000 A and 100000 A respectively), a refractive index detector, chloroform as eluent (flow 1 ml/min), using polystyrene as the reference standard.

The terminal acid groups content of the polyesters of the binder mixture according to this invention is preferably between 40 and 160 meq/kg, more preferably of 55-140meq/kg.

The terminal acid groups content may be measured as follows: 1.5-3 g of polyester are placed in a 100 ml flask together with 60 ml of chloroform. After the polyester has been completely dissolved 25 ml of 2-propanol are added, together with 1 ml of deionised water immediately before analysis. The solution so obtained is titrated against a previously standardised solution of NaOH in ethanol. An appropriate indicator, such as for example a glass electrode for acid-base titrations in non-aqueous solvents, is used to determine the end point of the titration. The terminal acid groups content is calculated on the basis of the consumption of NaOH solution in ethanol using the following equation:

$$\text{Terminal acid groups content (meq /kg  polymer)} = \frac{\left[(V_{eq} - V_b)\cdot T\right]\cdot 1000}{P}$$

in which: $V_{eq}$ = ml of NaOH solution in ethanol at the end point of titration of the sample;
$V_b$ = ml of NaOH solution in ethanol necessary to reach pH = 9.5 during the blank titration;

T = concentration of the NaOH solution in ethanol expressed in moles/litre;
P = weight of the sample in grams.

Preferably the polyesters of the binder mixture according to this invention have an inherent viscosity (measured using an Ubbelohde viscometer for solutions in $CHCl_3$ having a concentration of 0.2 g/dl at 25°C) of more than 0.3 dl/g, preferably between 0.3 and 2 dl/g, more preferably between 0.4 and 1.1 dl/g.

Preferably the polyesters of the binder mixture according to this invention are biodegradable. In the meaning of this invention, by biodegradable polymers are meant biodegradable polymers according to standard EN 13432.

The polyesters in the binder mixture according to this invention can be synthesised using any of the processes known in the state of the art. In particular they may advantageously be obtained through a polycondensation reaction.

Advantageously the synthesis process may be carried out in the presence of a suitable catalyst. As suitable catalysts mention may for example be made of organometallic compounds of tin, for example derivatives of stannoic acid, titanium compounds, for example orthobutyl titanate, aluminium compounds, for example triisopropyl aluminium, and compounds of antimony and zinc and zirconium and mixtures thereof.

As far as the dihydroxyl compounds in the binder mixture according to this invention are concerned, these have the formula $C_nH_{2n}(OH)_2$ where "n" is between 2 and 14, preferably selected from 1,2-ethandiol, 1,2-propandiol, 1,3-propandiol, 1,4-butandiol, 1,5-pentandiol, 1,6-hexandiol, 1,7-heptandiol, 1,8-octandiol, 1,9-nonandiol, 1,10-decandiol, 1,11-undecandiol, 1,12-dodecandiol, 1,13-tridecandiol. In a preferred embodiment the dihydroxyl compounds in the binder mixture according to this invention comprise at least 50% in moles of one or more of 1,2-ethandiol, 1,3-propandiol and 1,4-butandiol. More preferably the dihydroxyl compounds in the binder mixture comprise or consist of 1,4-butandiol.

In the binder mixture according to this invention the cross-linking and/or chain extender agent is selected from compounds having two and/or more functional groups including isocyanate, peroxide, carbodiimide, isocyanurate, oxazoline, epoxy, anhydride and divinylether groups, and mixtures thereof.

The cross-linking and/or chain extender agent comprises at least 25% by weight of one or more compounds having two and/or more functional groups including isocyanate groups. Particularly preferred are mixtures of compounds having two and/or more functional groups including isocyanate groups with compounds having two and/or more functional groups including epoxy groups, even more preferably comprising at least 75% by weight of compounds having two and/or more functional groups including isocyanate groups.

The compounds having two and multiple functional groups including isocyanate groups are preferably selected from phenylene diisocyanate, 2,4-toluene diisocyanate, 2,6-toluene diisocyanate, 4,4-diphenylmethane-diisocyanate, 1,3-phenylene-4-chloro diisocyanate, 1,5-naphthalene diisocyanate, 4,4-diphenylene diisocyanate, 3,3'-dimethyl-4,4-diphenylmethane diisocyanate, 3-methyl-4,4'-diphenylmethane diisocyanate, diphenylester diisocyanate, 2,4-cyclohexane diisocyanate, 2,3-cyclohexane diisocyanate, 1-methyl 2,4-cyclohexyl diisocyanate, 1-methyl 2,6-cyclohexyl diisocyanate, bis-(isocyanate cyclohexyl) methane, 2,4,6-toluene triisocyanate, 2,4,4-diphenylether triisocyanate, polymethylene-polyphenyl-polyisocyanates, methylene diphenyl diisocyanate, triphenylmethane triisocyanate, 3,3'-ditoluene-4,4-diisocyanate, 4,4'-methylene bis (2-methyl-phenyl isocyanate), hexamethylene diisocyanate, 1,3-cyclohexylene diisocyanate, 1,2-cyclohexylene diisocyanate and mixtures thereof. In a preferred embodiment the compound including isocyanate groups is 4,4-diphenylmethane-diisocyanate.

As far as the compounds having two or more functional groups containing peroxide groups are concerned, these are preferably selected from benzoyl peroxide, lauroyl peroxide, isononanoyl peroxide, di-(t-butylperoxyisopropyl)benzene, t-butyl peroxide, dicumyl peroxide, alpha,alpha'-di(t-butylperoxy)diisopropylbenzene, 2,5-dimethyl-2,5di(t-butylperoxy)hexane, t-butyl cumyl peroxide, di-t-butylperoxide, 2,5-dimethyl-2,5-di(t-butylperoxy)hex-3-yne, di(4-t-butylcyclohexyl)peroxy dicarbonate, dicetyl peroxydicarbonate, dimyristyl peroxydicarbonate, 3,6,9-triethyl-3,6,9-trimethyl-1,4,7-triperoxonane, di(2-ethylhexyl) peroxydicarbonate and mixtures thereof.

The compounds having two or more functional groups including carbodiimide groups which are preferably used in the binder mixture according to this invention are selected from poly(cyclooctylene carbodiimide), poly(1,4-dimethylene cyclohexylene carbodiimide), poly(cyclohexylene carbodiimide), polyethylene carbodiimide), poly(butylene carbodiimide), poly(isobutylene carbodiimide), poly(nonylene carbodiimide), poly(dodecylene carbodiimide), poly(neopentylene carbodiimide), poly(1,4-dimethylene phenylene carbodiimide), poly(2,2',6,6'-tetraisopropyldiphenylene carbodiimide) (Stabaxol® D), poly(2,4,6-triisopropyl-1,3-phenylene carbodiimide) (Stabaxol® P-100), poly(2,6 diisopropyl-1,3-phenylene carbodiimide) (Stabaxol® P), poly(tolyl carbodiimide), poly(4,4'-diphenylmethane carbodiimide), poly(3,3'-dimethyl-4,4'-biphenylene carbodiimide), poly(p-phenylene carbodiimide), poly(m-phenylene carbodiimide), poly(3,3'-dimethyl-4,4'-diphenylmethane carbodiimide), poly(naphthalene carbodiimide), poly(isophorone carbodiimide), poly(cumene carbodiimide), p-phenylene bis(ethylcarbodiimide), 1,6-hexamethylene bis(ethylcarbodiimide), 1,8-octamethylene bis(ethylcarbodiimide), 1,10-decamethylene bis(ethylcarbodiimide), 1,12 dodecamethylene bis(ethylcarbodiimide) and mixtures thereof.

Examples of compounds having two or more functional groups comprising epoxy groups which can advantageously be used in the binder mixture according to this invention are also the polyepoxides of epoxydated oils and/or styrene-glycidylether-methylmethacrylate, glycidylether methylmethacrylate, included in a range of molecular weights between 1000 and 10000 and having a number of epoxides per molecule in the range from 1 to 30 and preferably 5 to 25, and the epoxides selected from the group comprising: diethylene glycol diglycidyl ether, polyethylene glycol diglycidyl ether, glycerol polyglycidyl ether, diglycerol polyglycidyl ether, 1,2-epoxy butane, polyglycerol polyglycidyl ether, isoprene diepoxide, and cycloaliphatic diepoxides, 1,4-cyclohexane dimethanol diglycidyl ether, glycidyl 2-methylphenyl ether, glycerol propoxylatotriglycidyl ether, 1,4-butandiol diglycidyl ether, sorbitol polyglycidyl ether, glycerol diglycidyl ether, meta-xylenediamine tetraglycidyl ether and bisphenol A diglycidyl ether and mixtures thereof.

Together with the compounds having two or more functional groups including isocyanate, peroxide, carbodiimide, isocyanurate, oxazoline, epoxy, anhydride and divinylether groups in the binder mixture according to this invention, catalysts to render the reactivity of the reactive groups even greater may also be used. In the case of polyepoxides salts of fatty acids, even more preferably calcium and zinc stearates, are used.

In a particularly preferred embodiment of the invention the cross-linking and/or chain extender agent in the binder mixture comprises compounds including isocyanate groups, preferably 4,4-diphenylmethane-diisocyanate, which have proved to be particularly suitable because of their high reactivity to both the other components in the binder mixture and the lignocellulose component of wood fibre boards. Their use therefore results in the creation of a particularly stable cross-linked structure between the binder mixture and the lignocellulose component which imparts particularly high level properties to the wood fibre boards. The boards so obtained in fact demonstrate mechanical and water resistance properties similar to those of similar boards manufactured with conventional resins containing formaldehyde.

As far as the compounds containing silicon are concerned, these are selected from (3-glycidyloxypropyl)trimethoxysilane, (3-isocyanatopropyl) triethoxysilane and organosilanes having at least one sulfur atom, including among the latter preferably those selected from bis (3-triethoxysilylpropyl) tetrasulfide, $\gamma$-mercaptopropyl methoxysilane, 3-thiocyanatopropyl triethoxysilane, trimethoxysilyl propyl mercaptobenzotriazol tetrasulfide, are particularly preferred.

The use of these organosilanes has proved particularly advantageous for obtaining high values of water resistance in the boards according to this invention.

As far as the thermoplastic polyolefin having a melting point $\leq 140°C$, determined by Differential Scanning Calorimetry (DSC) according to standard ASTM D3418, in the binder mixture according to this invention are concerned, low density polyethylene, more preferably characterised by density values between 0.91 and 0.97 is preferred. Commercial examples of low density polyethylene which can be used in the binder mixture according to this invention are for example marketed under the trade marks Lupolen ® or Dowlex ®.

The binder mixture according to this invention is suitable for use in any process for the preparation of wood fibre boards known to those skilled in the art as a complete or partial substitute for traditional binder mixtures containing urea, formaldehyde, melamine or phenol. In addition to components i.-vi. the binder mixtures according to this invention may contain up to 5% by weight with respect to the total weight of components i.-vi. of resins containing urea, formaldehyde, melamine or phenol without encountering problems associated with the release of their by-products, for example formaldehyde.

The binder mixtures according to this invention may also contain other additives conventionally used for the production of wood boards such as pigments, fillers, antioxidants, anti-mould agents, surfactants, waxes, or ammonium sulfate in the quantities known to those skilled in the art.

The binder mixture according to this invention may also be used for the manufacture of wood fibre boards of other types such as chipboard, in which the wood fibres have different morphologies and may be in the form of chips, particles or oriented strands, laminated wood fibre boards or MDF boards.

Thanks to the essential compositional characteristics of the binder mixture according to this invention it is particularly suitable for use in a process for the preparation of wood fibre boards comprising the stages of:

a) preparing a homogeneous mixture of:

◦ 5-20% by weight, preferably 7-18 % by weight, of the binder composition according to this invention;
◦ 80-95% by weight, preferably 82-93% by weight, of wood fibre, this percentage being determined on the weight of the dry wood fibre;

b) applying a pressure of 40-100 kg/cm$^2$, preferably 60-80 kg/cm$^2$, and a temperature of 150-200°C, preferably 160-190°C, to the homogeneous mixture in stage a) for a time of less than 20 minutes, preferably between 1 and 15 minutes, more preferably between 5 and 15 minutes, in a mould, obtaining a pre-board ;
c) releasing the pre-board in stage b) from the mould and cooling it to ambient temperature at atmospheric pressure for a time of less than 20 minutes, preferably between 5 and 15 minutes.

This invention also relates to the said process.

Through the process according to this invention it is possible to manufacture wood fibre boards from wood fibre of any type and origin, for example chips, slivers or particles in which the lignocellulose component has also been defibred through the use of preliminary chemical/physical treatments. The said wood fibres advantageously have a water content of between 2 and 6% by weight, preferably between 3 and 5% by weight. In an embodiment of the process according to this invention, before stage a) the wood fibres are preferably conditioned to this water content by adding or removing appropriate quantities through techniques known to those skilled in the art. In the case of removal, for example, the wood fibres are conditioned to the desired water content by drying, preferably at 70°C. The water content of the wood fibres can be determined by any method known to those skilled in the art, for example by gravimetric determination of the weight loss from the wood fibres placed in a heat balance set to 140°C.

As far as stage a) of the process according to this invention is concerned, this can be carried out by placing the components of the binder mixture and the wood fibres in contact in one or more stages and mixing for the time necessary in order to obtain a homogeneous mixture. Obtaining a homogeneous mixture is desirable given that the presence of inhomogeneities may give rise to non-uniformity in the properties of the wood fibre board at the end of the production process.

In a first preferred embodiment of stage a) of the process according to this invention, the components of the binder mixture and the wood fibres are placed in contact in two stages.

In a first stage (stage a-1) the components of the binder mixture which is liquid at ambient temperature are applied to the wood fibres by nebulisation, spraying or any other suitable technique for distributing a liquid compound over the surface of the wood fibres, obtaining a moist pre-mix. In order to effect better distribution of the liquid components over the wood fibres it is preferable to subdivide it into one or more aliquots, more preferably from 1 to 5 aliquots, and subdividing application into one or more operations, mixing the pre-mixture after the application of each aliquot.

Subsequently (stage a-2) the components of the binder mixture which are solid at ambient temperature are added and mixed to the moist pre-mixture. Again in this case it is preferable to perform addition of the solid components to the moist pre-mixture in one or more operations, more preferably 1 to 3, mixing after each addition.

In another preferred embodiment of stage a) of the process according to this invention, the component of the binder mixture and wood fibres are placed in contact in three stages.

In a first stage (ab-1) the components of the binder mixture which are liquid at ambient temperature, apart from any cross-linking and/or chain extender agents which are liquid at ambient temperature, are applied to the wood fibres by nebulisation, spraying or any other technique which is suitable for distributing a liquid compound over the surface of the wood fibres, obtaining a moist pre-mix. In order to permit better distribution of the liquid components over the wood fibres it is preferable to subdivide it into one or more aliquots, more preferably from 1 to 5 aliquots, and subdivide application into one or more operations, mixing the pre-mix after the application of each aliquot.

Subsequently (stage ab-2) the components of the binder mixture which are solid at ambient temperature are added and mixed to the moist pre-mixture. Again in this case it is preferable to add the solid components to the moist pre-mixture in one or more operations, more preferably 1 to 3, mixing after each addition.

Finally (stage ab-3), the cross-linking and/or chain extender agents are added last. Again in this case it is preferable to perform the addition in one or more operations, more preferably 1 to 3, mixing after each addition.

Stage a) of the process according to this invention may be carried out in any equipment which is suitable for placing the components of the binder mixture and the wood fibres in contact, for example a static mixer, for example a Haake Rheomix ® mixer.

After stage a) of the process according to this invention, the homogeneous mixture is subjected to pressure and temperature conditions in stage b) suitable for bringing about reaction of the binder mixture which will ensure structural unity for the wood fibre boards. After stage a) and before stage b) the homogeneous mixture may advantageously undergo pre-compacting treatment which facilitates subsequent reaction of the binder mixture by encouraging contact between the components of the homogeneous mixture. This pre-compacting is preferably carried out by applying a pressure at ambient temperature such that the density of the mixture increases from 70-100 kg/m$^3$ to 120-150 kg/m$^3$. In a preferred embodiment of the process according to this invention the said pre-compacting is carried out in the same mould as is used for stage b) of the process.

In a particularly preferred embodiment of the process the pre-compacted mixture is directly subjected to the conditions in stage b) of the process, preferably gradually passing from the pre-compacting temperature and pressure conditions to the temperature and pressure conditions in stage b).

At the end of stage b) of the process according to this invention, the binder mixture has reacted with the wood fibres and a pre-board is obtained and in subsequent stage c) this is released from the mould and cooled to ambient temperature at atmospheric pressure for a time of less than 20 minutes, preferably between 5 and 15 minutes. Longer times do not provide any substantial benefits, but instead result in lesser productivity from the process. At the end of stage c) the wood fibre board so obtained can be sent to the subsequent stages of processing (cutting, finishing) as appropriate.

The wood fibre board which can be obtained by the process according to the invention is characterised by an elastic modulus higher than 1700 MPa, preferably of 2200-3600 MPa, an ultimate tensile strength of 20-35 MPa, and deformation on fracture of 1-2% measured in accordance with standard UNI EN 310:1994 using test coupons 2 cm wide and having a length/thickness ratio = 15, as well as dimensional stability and resistance to water of < 50% measured by swelling in water after 24 hours according to standard EN 317:1994, values referring to wood fibre boards having a thickness of approximately 9-10 mm and a density within the range from 650 to 975 kg/m$^3$, preferably 750-950 kg/m$^3$, even more preferably 800-900 kg/m$^3$, being therefore suitable for use for the production of materials for building or the furniture industry.

The invention will now be illustrated by a number of embodiments which are to be intended to be purely exemplary and not limiting the scope of protection of this patent application.

EXAMPLES

If not otherwise specified, the following materials have been used for the preparation of the boards:

- paraffin emulsion : DAP 281 Emulser 60 - manufactured by SER Wax Industry;
- urea-formaldehyde resin :Ancorpress 117 R - manufactured by Ancora;
- melamine-formaldehyde resin :Kauramin 712 - manufactured by BASF;
- LLDPE: LLDPE Dowlex 2631.10 UE - manufactured by Dow
- Poly(1,4-butylene succinate): see preparative Example 1 ;
- Poly(1,4-butylene succinate) low MM*: see preparative Example 2 ;
- Poly(1,4-butylene adipate-co-terephthalate): see preparative Example 3;
- 4,4-diphenylmethane-diisocyanate : ISOCOM L - manufactured by Coim;
- Styrene-glycidylether-methylmethacrylate copolymer: Joncryl® ADR 4368 CS - manufactured by BASF;
- 3-isocyanatopropyl) triethoxysilane CAS 24801-88-5 from Sigma Aldrich;
- (3-glycidyloxypropyl) trimethoxysilane CAS 2530-83-8 from Sigma Aldrich;

Preparative Example 1 - Poly(1,4-butylene succinate) having Mn 55000, Mw 123000, containing 75 meq/kg terminal acid groups

Esterification stage

17150 g of succinic acid, 14125 g of 1,4-butanediol, 26.75 g of glycerine and 2.0 g of an 80% by weight ethanolic solution of diisopropyl triethanolamino Titanate (Tyzor TE, containing 8.2% of Titanium by weight) were added in a diol/dicarboxylic acid molar ratio (MGR) of 1.08 to a steel reactor having a geometrical capacity of 70 litres, fitted with a mechanical stirrer system, an inlet for nitrogen, a distillation column, a abatement system for high-volume distillates and a connection to a high vacuum system.

The temperature of the mass was gradually increased to 230°C over a period of 120 minutes.

Polycondensation stage

When 95% of the theoretical water had been distilled off, 21.25 g of tetra n-butyl Titanate (corresponding to 119 ppm of metal with respect to a quantity of poly-1,4-butylene succinate, which could theoretically be obtained by converting all the succinic acid fed to the reactor) was added. The reactor temperature was then raised to 235-240°C and the pressure was gradually reduced to finally reach a value of less than 2 mbar over a period of 60 minutes. The reaction was allowed to proceed for approximately 4 hours and then the material was discharged into a water bath in the form of strands and granulated, thus obtaining a poly(1,4-butylene succinate) having Mn 55000 and Mw 123000 and 75 meq/kg terminal acid groups.

Preparative Example 2 - Poly(1,4-butylene succinate) low MM* having Mn 30400, Mw 70500 , containing 140 meq/kg terminal acid groups, MFR 69g/10min. (190°C - 2,16 Kg - 1 g/cm3)

Preparative Example 1 was repeated, allowing to proceed the polycondensation stage for approximately 3 instead of 4 hours , thus obtaining a poly(1,4-butylene succinate) having Mn 30400, Mw 70500 , containing 140 meq/kg terminal acid groups, and having a MFR of 69g/10min (190°C - 2,16 Kg - 1 g/cm3).

Preparative Example 3 - Poly(1,4-butylene adipate-co-terephthalate) having MFR 12 g/10min. (190°C - 2,16 Kg - 1.05 g/cm3); containing 68 meq/Kg terminal acid groups Esterification stage

7450 g of terephthalic acid, 7390 g of adipic acid, 12890 g of 1,4-butanediol, 13.2 g of glycerine and 3.4 g of an 80% by weight ethanolic solution of diisopropyl triethanolamino Titanate (Tyzor TE, containing 8.2% by weight of Titanium) were added in a diol/dicarboxylic acid molar ratio (MGR) of 1.50 to a steel reactor having a geometrical capacity of 70litres, fitted with a mechanical stirrer system, an inlet for nitrogen, a distillation column, an abatement system for high-volume distillates and a connection to a high vacuum system.

The temperature of the mass was gradually increased to 230°C over a period of 120 minutes.

Polycondensation stage

When 95% of the theoretical water had been distilled off, 17.2 g (corresponding to 120 ppm of metal with respect to the quantity of polyester which could theoretically be obtained by converting all the adipic acid and all the terephthalic acid fed to the reactor) of tetra n-butyl Titanate was added. The temperature of the reactor was then raised to 235-240°C and the pressure was gradually reduced until a value of less than 2 mbar was reached over a period of 60 minutes. The reaction was allowed to proceed for approximately 5 hours, and then the material was discharged into a water bath in the form of a strands and granulated, thus obtaining a Poly(1,4-butylene adipate-co-terephthalate) with MFR 12 g/10min. (190°C - 2,16 Kg - 1.05 g/cm3) and containing 68 meq/Kg terminal acid groups.

Comparative Example 1

Approximately 230 grams of "La Sole Superspan" fir wood chips having a water content of 4% by weight were sprayed with a liquid mixture comprising 19.8 grams of water and 1.5 grams of paraffin emulsion (DAP 281 Emulser 60 - manufactured by SER Wax Industry). The liquid mixture was added to the chips in three aliquots, mixing the chips after each addition so as to homogenise distribution of the various components. Subsequently a solid mixture comprising 0.4 parts by weight of ammonium sulfate, 40 grams of urea-formaldehyde resin (Ancorpress 117 R - manufactured by Ancora), 4.5 grams of melamine-formaldehyde resin (Kauramin 712 - manufactured by BASF) were added, again in three aliquots and again mixing the whole after each addition. A homogeneous starting mixture having the following percentage composition was thus obtained:

| Component | % by weight |
|---|---|
| Fir chips (4% $H_2O$) | 77.6 |
| Water | 6.6 |
| Paraffin emulsion | 0.5 |
| Urea-formaldehyde resin | 13.4 |
| Melamine formaldehyde resin | 1.5 |
| Ammonium sulfate | 0.4 |

The starting mixture was then transferred into a mould comprising a removable top die having internal dimensions 14.5 x 14.5 x 30 cm and a base comprising a 30 x 30 cm wood platen on which aluminium foil 0.3 mm and a sheet of poly(ethylene terephthalate) (Mylar®) 0.15 mm thick in direct contact with the mixture had previously been placed. The mixture within the preform was then pre-compacted applying a pressure such as to reduce the thickness within the preform to approximately 60% of the initial value. The pre-compacting system comprised a wood compressor having dimensions 14 x 14 x 4 cm driven by an iron cylinder of diameter 11.5 cm weighing 3.4 kg which was pressed upon the wood compressor by means of a lever system. Once pre-compacted to the desired thickness the imposed pressure, the metal cylinder and the wood compressor were removed. The pre-compacted mixture was also released from the top die of the mould, remaining on the aluminium and poly(ethylene terephthalate) sheets.

A metal die 1 cm thick having the internal measurements 18 x 18 x 1 cm was then placed around the pre-compacted mixture, transferring the whole to a second press (Carver 38530E-0) preheated to approximately 180°C. A pressure of 70 kg/cm2 was then applied in the second press and held for a time of 10 minutes. After removing the applied pressure the whole was transferred to a cooling press (Carver 19405-25) and the board so obtained was allowed to cool to ambient temperature for 10 minutes. The aluminium and poly(ethylene terephthalate) and the metal die were then removed.

The board so obtained was subsequently characterised to determine its mechanical properties according to standard UNI EN 310:1994, using test coupons 2 cm wide and having a length/thickness ratio = 15, and its water resistance, measured as swelling in water after 24 hours in accordance with standard EN 317:1994. The data are shown in Tables 2 and 3.

Comparative Example 2

Approximately 267 grams of "La Sole Superspan" fir wood chips having a water content of 4% by weight were nebulised in three aliquots with 9.3 grams of water, mixing the chips after each addition. Subsequently a solid mixture comprising 11.7 grams of LLDPE polyethylene (Dowlex 2631 - manufactured by Dow), 5.7 grams of poly(1,4-butylene succinate) according to Preparative Example 1, was then added, again in three aliquots and always mixing the whole after each addition. Finally 7.2 grams of 4,4-diphenylmethane-diisocyanate were added. A homogeneous starting mixture having the percentage composition shown in Table 1 was obtained in this way.

The starting mixture so obtained was then used to produce a board under the same conditions as Comparative Example 1. The board so obtained was subsequently characterised to determine its density, thickness and water resistance, measured as swelling in water after 24 hours according to standard EN 317:1994. The data are shown in Table 2.

Examples 1-5 and Comparative Examples 2 and 3

The following starting mixtures shown in Table 1 were prepared using the same materials and operating procedures as used in Comparative Example 2. The starting mixture so obtained was then used to produce a board under the same conditions as in Comparative Example 1. The board so obtained was subsequently characterised to determine its resistance to water, measured a swelling in water after 24 hours according to standard EN 317:1994. The data are shown in Table 2.

TABLE 1 - Homogeneous starting mixtures according to Examples 1-7

| | Comparative example 2 (% by weight) | Example 1 (% by weight) | Example 2 (% by weight) | Example 3 (% by weight) | Example 4 (% by weight) | Comparative Example 3 (% by weight) | Example 5 (% by weight) |
|---|---|---|---|---|---|---|---|
| Fir chips (4% $H_2O$) | 88.8 | 84.3 | 87.8 | 87 | 90.6 | 83.0 | 86.5 |
| Water | 3.0 | 3.0 | 3.0 | 3.0 | - | 2.9 | 3.0 |
| LLDPE | 3.9 | 3.7 | 3.9 | 3.9 | 4.0 | 5.0 | 4.0 |
| Poly(1,4-butylene succinate) according to Preparative Example 1 | 1.9 | 1.9 | 1.9 | 2.0 | 1.9 | 1.8 | 2.0 |
| 4,4-diphenylmethane-diisocyanate | 2.4 | 2.3 | 2.4 | 2.5 | 2.5 | 2.3 | 2.5 |
| Styrene-glycidylether-methylmethacrylate copolymer | - | - | - | - | - | 5.0 | 0.5 |
| (3-isocyanatopropyl) triethoxysilane * | - | 5.0 | 1.0 | - | 1.0 | - | - |
| (3-glycidyloxypropyl) trimethoxysilane * | - | - | - | 1.5 | - | - | 1.5 |
| * added together with the liquid components | | | | | | | |

TABLE 2 - Density, thickness and water resistance, measured as swelling in water after 24 hours according to standard EN 317:1994

| Example | Comparative 1 | Comparative 2 | 1 | 2 | 3 | 4 | Comparative 3 | 5 |
|---|---|---|---|---|---|---|---|---|
| Density (kg/m$^3$) | 870-898 | 898 | 789 | 887 | 932 | 953 | 871 | 905 |

(continued)

| Example | Comparative 1 | Comparative 2 | 1 | 2 | 3 | 4 | Comparative 3 | 5 |
|---|---|---|---|---|---|---|---|---|
| Thickness (mm) | 9.8-9.9 | 9.5 | 9.6 | 9.4 | 9.3 | 9.6 | 9.5 | 9.6 |
| Swelling at the centre point of the test coupon (%) | 25.38 | 45.28 | 27.49 | 21.58 | 27.50 | 24.20 | 22.20 | 17.9 |

The water resistance of the board according to this invention and the further improving effect resulting from the use of organosilanes in the binder mixture is clear from the data in Table 2.

Examples 6-10

The following starting mixtures shown in Table 3 were prepared using the same raw materials and operating procedures as used in Comparative Example 2. The starting mixture so obtained was then used to produce a board under the same conditions as in Comparative Example 1. The board so obtained was subsequently characterised to determine its mechanical properties according to standard UNI EN 310:1994 using test coupons 2 cm wide having a length/thickness ratio = 15, and its water resistance, measured as swelling in water after 24 hours according to standard EN 317:1994. The data are shown in Table 4.

TABLE 3 - Homogeneous starting mixtures according to Examples 6-10

| | Example 6 (% by weight) | Example 7 (% by weight) | Example 8 (% by weight) | Example 9 (% by weight) | Example 10 (% by weight) |
|---|---|---|---|---|---|
| Fir chips (4% $H_2O$) | 88.0 | 88.0 | 89,5 | 88.0 | 88.0 |
| Water | 3.0 | 3.0 | 3,0 | 3.0 | 3.0 |
| LLDPE | 4.0 | 4.0 | 4,0 | 4.0 | 4.0 |
| Poly(1,4-butylene succinate) according to Preparative Example 1 | 2.0 | 2.0 | 0,5 | - | - |
| Poly(1,4-butylene succinate) low MM according to Preparative Example 2 | - | - | - | - | 2.0 |
| Poly(1,4-butylene adipate-co-terephthalate) according to Preparative Example 3 | - | - | - | 2,0 | - |
| 4,4-diphenylmethane-diisocyanate | 2.5 | 2.5 | 2.5 | 2.5 | 2.5 |
| (3-glycidyloxypropyl) trimethoxysilane * | 0.5 | 2.5 | 0,5 | 0.5 | 0.5 |
| * added together with the liquid components | | | | | |

TABLE 4 - Density, thickness, mechanical properties and water resistance, measured as swelling in water after 24 hours according to standard EN 317:1994

| Example | Comparative 1 | 6 | 7 | 8 | 9 | 10 |
|---|---|---|---|---|---|---|
| Density (kg/m$^3$) | 870-898 | 743 | 786 | 783 | 839 | 813 |
| Thickness (mm) | 9.8-9.9 | 9.8 | 9.6 | 9,9 | 9,6 | 9.7 |
| Ultimate tensile strength (MPa) | 26.6 | 29.6 | 32.8 | 25,8 | 31,4 | 29.3 |

(continued)

| Example | Comparative 1 | 6 | 7 | 8 | 9 | 10 |
|---|---|---|---|---|---|---|
| Deformation on fracture (%) | 2.0 | 1.7 | 1.5 | 1,5 | 1,7 | 1.6 |
| Elastic modulus (MPa) | 2444 | 2620 | 3512 | 2862 | 3137 | 2844 |
| Swelling at the centre point of the coupon (%) | 25.38 | 20.60 | 17.18 | 20,9 | 22,0 | 21.5 |

Comparative Example 4

Approximately 273.4 grams of "La Sole Superspan" fir wood chips having a water content of 4% by weight were nebulised in three aliquots with 9.3 grams of water, mixing the chips after each addition. Subsequently a solid mixture comprising 8.1 grams of LLDPE polyethylene (Dowlex 2631 - manufactured by Dow), 4.1 grams of poly(1,4-butylene succinate) according to preparative Example 1, was then added, again in three aliquots and always mixing the whole after each addition. Finally 5.1 grams of 4,4-diphenylmethane-diisocyanate were added. A homogeneous starting mixture having the percentage composition shown in Table 5 was obtained in this way.

The starting mixture so obtained was then used to produce a board under the same conditions as Comparative Example 1, with the difference that the pre-compacted mixture was held in the second press for a time of 1.5 min instead of 10 minutes. The board so obtained was subsequently characterised to determine its mechanical properties according to standard UNI EN 310:1994 using test coupons 2 cm wide having a length/thickness ratio = 15, and its water resistance, measured as swelling in water after 24 hours according to standard EN 317:1994. The data are shown in Table 6.

Examples 11-13 starting mixtures shown in Table 5 were prepared using the same raw materials and operating procedures as used in Comparative Example 4.

TABLE 5 - Homogeneous starting mixtures according to Comparative Example 4 and Examples 11-13

| | Comparative Example 4 (% by weight) | Example 11 (% by weight) | Example 12 (% by weight) | Example 13 (% by weight) |
|---|---|---|---|---|
| Fir chips (4% $H_2O$) | 91.14 | 90.80 | 90.80 | 90.80 |
| Water | 3.10 | 3.10 | 3.10 | 3.10 |
| LLDPE | 2.71 | 2.71 | - | 2.71 |
| Poly(1,4-butylene succinate) according to Preparative Example 1 | 1.36 | 1.36 | 4.07 | - |
| Poly(1,4-butylene succinate) low MM according to Preparative Example 2 | - | - | - | 1.36 |
| 4,4-diphenylmethane-diisocyanate | 1.69 | 1.69 | 1.69 | 1.69 |
| (3-glycidyloxypropyl) trimethoxysilane * | - | 0.34 | 0.34 | 0.34 |
| * added together with the liquid components | | | | |

TABLE 6 - Density, thickness, mechanical properties and water resistance, measured as swelling in water after 24 hours according to standard EN 317:1994

| Example | Comparative 4 | 11 | 12 | 13 |
|---|---|---|---|---|
| Density (kg/m³) | 777 | 800 | 807 | 767 |
| Thickness (mm) | 10.0 | 10.2 | 9.9 | 10.1 |

(continued)

| Example | Comparative 4 | 11 | 12 | 13 |
|---|---|---|---|---|
| Ultimate tensile strength (MPa) | 21.6 | 24.5 | 25.0 | 24.7 |
| Deformation on fracture (%) | 1.8 | 1.8 | 1.8 | 1.9 |
| Elastic modulus (MPa) | 1970 | 2261 | 2291 | 2134 |
| Swelling at the centre point of the coupon (%) | 40.2 | 37.4 | 33.1 | 36.0 |

**Claims**

1. Binder mixture, comprising with respect to the sum of components i.-vi.:

    i. 5-45% by weight of at least one polyester comprising:

        a) a dicarboxylic component comprising, with respect to the total dicarboxylic component:

            a1) 0-80% in moles of units deriving from at least aromatic dicarboxylic acid,
            a2) 20-100% in moles of units deriving from at least one saturated aliphatic dicarboxylic acid, and
            a3) 0-5% in moles of units deriving from at least one unsaturated aliphatic dicarboxylic acid; and

        b) a diol component comprising, with respect to the total for the diol component:

            b1) 95-100% in moles of units deriving from at least one saturated aliphatic diol, and
            b2) 0-5 % in moles of units deriving from at least one unsaturated aliphatic diol;

    ii. 0-6% by weight of at least one dihydroxyl compound having the formula $C_nH_{2n}(OH)_2$ in which "n" is from 2 to 14;
    iii. 10-55% by weight of at least one cross-linking and/or chain extender agent comprising at least one compound having two and/or multiple functional groups comprising isocyanate, peroxide, carbodiimide, oxazoline, epoxy, anhydride and divinylether groups and mixtures thereof wherein said agent iii. comprises at least 25% by weight of at least one compound having two and/or multiple functional groups including isocyanate groups;
    iv. 2-45% by weight of at least one compound containing silicon selected from (3-glycidyloxypropyl)trimethoxysilane, (3-isocyanatopropyl) triethoxysilane and organosilanes having at least one sulfur atom;
    v. 0-60% by weight of at least one thermoplastic polyolefin having a melting point ≤140°C; and
    vi. 0-40%) by weight of water.

2. Binder mixture according to claim 1, in which the said aromatic dicarboxylic acid in polyester i. is selected from aromatic dicarboxylic acids of the phthalic acid type, heterocyclic dicarboxylic aromatic compounds and mixtures thereof.

3. Binder mixture according to either of claims 1 or 2, in which the said saturated aliphatic dicarboxylic acid of polyester i. is selected from $C_2$-$C_{24}$ saturated dicarboxylic acids, their $C_1$-$C_{24}$ alkyl esters, their salts and mixtures thereof.

4. Binder mixture according to claim 3, in which the said saturated aliphatic dicarboxylic acid in polyester i. comprises mixtures comprising at least 50% in moles of succinic acid, adipic acid, azelaic acid, sebacic acid, brassylic acid, their $C_1$-$C_{24}$ esters and mixtures thereof.

5. Binder mixture according to any one of claims 1 to 4, in which the said polyester i. comprises at least one aliphatic polyester.

6. Binder mixture according to claim 5, in which the said aliphatic polyester i. is selected from the group consisting of poly(1,4-butylene succinate), poly(1,4-butylene adipate), poly(1,4-butylene azelate), poly(1,4-butylene sebacate), poly(1,4-butylene adipate-co-1,4-butylene succinate), poly(1,4-butylene azelate-co-1,4-butylene succinate), poly(1,4-butylene sebacate-co-1,4-butylene succinate), poly(1,4-butylene succinate-co-1,4-butylene adipate-co-1,4-butylene azelate).

**7.** Binder mixture according to claim 6, in which the said aliphatic polyester i. is poly(1,4-butylene succinate).

**8.** Binder mixture according to any one of claims 1 to 8, in which the said compound having two and/or multiple functional groups in the said cross-linking and/or chain extender agent iii. is selected from the group consisting of p-phenylene diisocyanate, 2,4-toluene diisocyanate, 2,6-toluene diisocyanate, 4,4'-diphenylmethane-diisocyanate, 1,3-phenylene-4-chloro diisocyanate, 1,5-naphthalene diisocyanate, 4,4'-diphenylene diisocyanate, 3,3'-dimethyl-4,4'-diphenylmethane diisocyanate, 3-methyl-4,4'-diphenylmethane diisocyanate, diphenylester diisocyanate, 2,4-cyclohexane diisocyanate, 2,3-cyclohexane diisocyanate, 1-methyl2,4-cyclohexyl diisocyanate, 1-methyl2,6-cyclohexyl diisocyanate, bis-(isocyanate cyclohexyl) methane, 2,4,6-toluene triisocyanate, 2,4,4'-diphenylether triisocyanate, polymethylene-polyphenyl-polyisocyanates, methylene diphenyl diisocyanate, triphenylmethane triisocyanate, 3,3'-ditolylene-4,4-diisocyanate, 4,4'-methylenebis (2-methyl-phenyl isocyanate), hexamethylene diisocyanate, 1,3-cyclohexylene diisocyanate, 1,2-cyclohexylene diisocyanate and mixtures thereof.

**9.** Binder mixture according to claim 9, in which the said compound having two and/or multiple functional groups in the said cross-linking and/or chain extender agent iii. is 4,4'-diphenylmethane-diisocyanate.

**10.** Binder mixture according to any one of claims 1 to 10, in which the said compound containing silicon iv. is selected from the group consisting of organosilanes having a general formula selected from:

$$(RO)_3SiC_nH_{2n}S_mC_nH_{2n}Si(OR)_3 \qquad (I)$$

$$(RO)_3SiC_nH_{2n}X \qquad (II)$$

$$(RO)_3SiC_nH_{2n}S_mY \qquad (III)$$

in which R represents an alkyl group having 1 to 4 carbon atoms, the three R being the same or different, "n" represents a whole number from 1 to 6, "m" represents a whole number from 1 to 6, X represents a mercaptan group, an amine group, a vinyl group, a nitroso group, an imide group, a chlorine atom or an epoxy group; and Y represents a cyanide group, a N,N-dimethyl thiocarbamoyl group, a mercaptobenzotriazol group or a methacrylate group.

**11.** Process for the manufacture of wood fibre board comprising the stages of:

　　a) preparing a homogeneous mixture by mixing:

　　　　o 5-20% by weight of the binder composition according to any one of claims 1 to 11;
　　　　o 80-95% by weight of wood fibre, this percentage being determined on the weight of the dry wood fibre;

　　b) applying a pressure of 40-100 kg/cm$^2$ and a temperature of 150-200°C to the homogeneous mixture in stage a) in a mould for a time of less than 20 minutes, obtaining a pre-board; and
　　c) releasing the pre-board from stage b) from the mould and cooling it to ambient temperature at atmospheric pressure for a time of less than 20 minutes.

**12.** Wood fibre board comprising the binder mixture according to any one of claims 1 to 11 having a thickness of between 9 and 10 mm and a density in the range from 650 to 975 kg/m$^3$, **characterised by** dimensional stability and resistance to water of < 50%, measured as swelling in water after 24 hours according to standard EN 317:1994, and by an ultimate tensile strength of between 20 and 35 MPa, a deformation on fracture of between 1 and 2% and an elastic modulus higher than 1700 MPa, in which the said ultimate tensile strength, deformation and fracture and elastic modulus are determined according to standard UNI EN 310:1994 using test coupons 2 cm wide and having a length/thickness ratio = 15.

**Patentansprüche**

**1.** Bindemittelmischung, umfassend bezogen auf die Summe der Komponenten i.-vi.:

　　i. 5-45 Gew.-% mindestens eines Polyesters, umfassend:

a) eine Dicarbonsäure-Komponente, umfassend bezogen auf die gesamte Dicarbonsäure-Komponente:

a1) 0-80 Mol-% Einheiten, die von mindestens einer aromatischen Dicarbonsäure stammen,
a2) 20-100 Mol-% Einheiten, die von mindestens einer gesättigten aliphatischen Dicarbonsäure stammen, und
a3) 0-5 Mol-% Einheiten, die von mindestens einer ungesättigten aliphatischen Dicarbonsäure stammen; und

b) eine Diol-Komponente, umfassend bezogen auf die gesamte Diol-Komponente:

b1) 95-100 Mol-% Einheiten, die von mindestens einem gesättigten aliphatischen Diol stammen, und
b2) 0-5 Mol-% an Einheiten, die von mindestens einem ungesättigten aliphatischen Diol stammen;

ii. 0-6 Gew.-% mindestens einer Dihydroxy-Verbindung mit der Formel $C_nH_{2n}(OH)_2$, worin "n" 2 bis 14 ist;
iii. 10-55 Gew.-% mindestens eines Vernetzungs- und/oder Kettenverlängerungsmittels, umfassend mindestens eine Verbindung mit zwei und/oder mehreren funktionellen Gruppen, umfassend Isocyanat-, Peroxid-, Carbodiimid-, Oxazolin-, Epoxy-, Anhydrid- und Divinylether-Gruppen und Mischungen davon, wobei das Mittel iii. mindestens 25 Gew.-% mindestens einer Verbindung mit zwei und/oder mehreren funktionellen Gruppen, enthaltend Isocyanatgruppen, umfasst;
iv. 2-45 Gew.-% mindestens einer siliciumhaltigen Verbindung, ausgewählt aus (3-Glycidyloxypropyl)trimethoxysilan, (3-Isocyanatopropyl)triethoxysilan und Organosilanen mit mindestens einem Schwefelatom;
v. 0-60 Gew.-% mindestens eines thermoplastischen Polyolefins mit einem Schmelzpunkt ≤ 140°C; und
vi. 0-40 Gew.-% Wasser.

**2.** Bindemittelmischung gemäß Anspruch 1, wobei die aromatische Dicarbonsäure im Polyester i. aus aromatischen Dicarbonsäuren vom Phthalsäure-Typ, heterocyclischen aromatischen Carbonsäure-Verbindungen und Mischungen davon ausgewählt ist.

**3.** Bindemittelmischung gemäß einem der Ansprüche 1 und 2, wobei die gesättigte aliphatische Dicarbonsäure des Polyesters i. aus gesättigten $C_2$-$C_{24}$-Dicarbonsäuren, deren $C_1$-$C_{24}$-Alkylestern, deren Salzen und Mischungen davon ausgewählt ist.

**4.** Bindemittelmischung gemäß Anspruch 3, wobei die gesättigte aliphatische Dicarbonsäure im Polyester i. Mischungen umfasst, die mindestens 50 Mol-% Bernsteinsäure, Adipinsäure, Azelainsäure, Sebacinsäure, Brassylsäure, deren $C_1$-$C_{24}$-Ester und Mischungen davon umfassen.

**5.** Bindemittelmischung gemäß einem der Ansprüche 1 bis 4, wobei der Polyester i. mindestens einen aliphatischen Polyester umfasst.

**6.** Bindemittelmischung gemäß Anspruch 5, wobei der aliphatische Polyester i. aus der Gruppe ausgewählt ist, die aus Poly(1,4-butylensuccinat), Poly(1,4-butylenadipat), Poly(1,4-butylenazelat), Poly(1,4-butylensebacat), Poly(1,4-butylenadipat-co-1,4-butylensuccinat), Poly(1,4-Butylenazelat-co-1,4-butylensuccinat), Poly(1,4-Butylensebacat-co-1,4-butylensuccinat), Poly(1,4-Butylensuccinat-co-1,4-butylenadipat-co-1,4-butylenazelat) besteht.

**7.** Bindemittelmischung gemäß Anspruch 6, wobei der aliphatische Polyester i. Poly(1,4-butylensuccinat) ist.

**8.** Bindemittelmischung gemäß einem der Ansprüche 1 bis 8, wobei die Verbindung mit zwei und/oder mehreren funktionellen Gruppen in dem Vernetzungs- und/oder Kettenverlängerungsmittel iii. aus der Gruppe ausgewählt ist, die aus p-Phenylendiisocyanat, 2,4-Toluoldiisocyanat, 2,6-Toluoldiisocyanat, 4,4'-Diphenylmethandiisocyanat, 1,3-Phenylen-4-chlordiisocyanat, 1,5-Naphthalindiisocyanat, 4,4'-Diphenyldiisocyanat, 3,3'-Dimethyl-4,4'-diphenylmethandiisocyanat, 3-Methyl-4,4'-diphenylmethandiisocyanat, Diphenylesterdiisocyanat, 2,4-Cyclohexandiisocyanat, 2,3-Cyclohexandiisocyanat, 1-Methyl-2,4-cyclohexyldiisocyanat, 1-Methyl-2,6-cyclohexyldiisocyanat, Bis(isocyanatocyclohexyl)methan, 2,4,6-Toluoltriisocyanat, 2,4,4'-Diphenylethertriisocyanat, Polymethylen-Polyphenyl-Polyisocyanaten, Methylendiphenyldiisocyanat, Triphenylmethantriisocyanat, 3,3'-Ditolylen-4,4-diisocyanat, 4,4'-Methylenbis(2-methylphenylisocyanat), Hexamethylendiisocyanat, 1,3-Cyclohexylendiisocyanat, 1,2-Cyclohexylendiisocyanat und Mischungen davon besteht.

**9.** Bindemittelmischung gemäß Anspruch 9, wobei die Verbindung mit zwei und/oder mehreren funktionellen Gruppen

in dem Vernetzungs- und/oder Kettenverlängerungsmittel iii. 4,4'-Diphenylmethandiisocyanat ist.

10. Bindemittelmischung gemäß einem der Ansprüche 1 bis 10, wobei die siliciumhaltige Verbindung iv. aus der Gruppe ausgewählt ist, bestehend aus Organosilanen mit einer allgemein Formel, ausgewählt aus:

$$(RO)_3SiC_nH_{2n}S_mC_nH_{2n}Si(OR)_3 \qquad (I)$$

$$(RO)_3SiC_nH_{2n}X \qquad (II)$$

$$(RO)_3SiC_nH_{2n}S_mY \qquad (III)$$

worin R für eine Alkylgruppe mit 1 bis 4 Kohlenstoffatomen steht, wobei die drei R gleich oder verschieden sind, "n" für eine ganze Zahl von 1 bis 6 steht, "m" für eine ganze Zahl von 1 bis 6 steht, X für eine Mercaptangruppe, eine Aminogruppe, eine Vinylgruppe, eine Nitrosogruppe, eine Imidgruppe, ein Chloratom oder eine Epoxygruppe steht; und Y für eine Cyanidgruppe, eine N,N-Dimethylthiocarbamoylgruppe, eine Mercaptobenzotriazolgruppe oder eine Methacrylatgruppe steht.

11. Verfahren zur Herstellung von Holzfaserplatten, umfassend die Stufen:

a) das Herstellen einer homogenen Mischung durch Mischen von:

· 5-20 Gew.-% der Bindemittelzusammensetzung gemäß einem der Ansprüche 1 bis 11;
· 80-95 Gew.-% Holzfasern, wobei dieser Prozentsatz basierend auf dem Gewicht der trockenen Holzfasern bestimmt wird;

b) das Anwenden eines Drucks von 40-100 kg/cm$^2$ und einer Temperatur von 150-200°C auf die homogene Mischung aus Stufe a) in einer Form für eine Zeit von weniger als 20 Minuten, um eine Vorplatte zu erhalten; und
c) das Lösen der Vorplatte aus Stufe b) aus der Form und das Abkühlen auf Umgebungstemperatur bei atmosphärischem Druck für eine Dauer von weniger als 20 Minuten.

12. Holzfaserplatte, umfassend die Bindemittelmischung gemäß einem der Ansprüche 1 bis 11, die eine Dicke zwischen 9 und 10 mm und eine Dichte im Bereich von 650 bis 975 kg/m$^3$ aufweist, **gekennzeichnet durch** Formstabilität und einer Wasserbeständigkeit von < 50%, gemessen als Quellung in Wasser nach 24 Stunden gemäß der Norm EN 317:1994, und durch eine Zugfestigkeit zwischen 20 und 35 MPa, eine Bruchverformung zwischen 1 und 2% und einen Elastizitätsmodul von mehr als 1700 MPa, wobei die Zugfestigkeit, Verformung und Bruch sowie der Elastizitätsmodul gemäß der Norm UNI EN 310:1994 unter Verwendung von 2 cm breiten Prüfkörpern mit einem Verhältnis Länge/Dicke = 15 bestimmt werden.

**Revendications**

1. Mélange de liant, comprenant par rapport à la somme des composants i.-vi. :

i. 5-45 % en poids d'au moins un polyester comprenant :

a) un composant dicarboxylique comprenant, par rapport au composant dicarboxylique total :

a1) 0-80 % en mole de motifs dérivés d'au moins un acide dicarboxylique aromatique,
a2) 20-100 % en mole de motifs dérivés d'au moins un acide dicarboxylique aliphatique saturé,
a3) 0-5 % en mole de motifs dérivés d'au moins un acide dicarboxylique aliphatique insaturé ; et

b) un composant diol comprenant, par rapport au total du composant diol :

b1) 95-100 % en mole de motifs dérivés d'au moins un diol aliphatique saturé, et
b2) 0-5 % en mole de motifs dérivés d'au moins un diol aliphatique insaturé ;

ii. 0-6 % en poids d'au moins un composé dihydroxylé présentant la formule $C_nH_{2n}(OH)_2$ dans laquelle « n » vaut de 2 à 14 ;

iii. 10-55 % en poids d'au moins un agent de réticulation et/ou d'allongement de chaîne comprenant au moins un composé présentant deux et/ou de multiples groupes fonctionnels comprenant des groupes isocyanate, peroxyde, carbodiimide, oxazoline, époxy, anhydride et divinyléther et des mélanges de ceux-ci, dans lequel ledit agent iii. comprend au moins 25 % en poids d'au moins un composé présentant deux et/ou de multiples groupes fonctionnels incluant des groupes isocyanate ;

iv. 2-45 % en poids d'au moins un composé contenant du silicium choisi parmi le (3-glycidyloxypropyl)triméthoxysilane, le (3-isocyanatopropyl)triéthoxysilane et des organosilanes présentant au moins un atome de soufre ;

v. 0-60 % en poids d'au moins une polyoléfine thermoplastique présentant un point de fusion $\leq$ 140 °C ; et

vi. 0-40 % en poids d'eau.

2. Mélange de liant selon la revendication 1, dans lequel ledit acide dicarboxylique aromatique dans le polyester i. est choisi parmi des acides dicarboxyliques aromatiques du type acide phtalique, des composés aromatiques dicarboxyliques hétérocycliques et des mélanges de ceux-ci.

3. Mélange de liant selon l'une ou l'autre des revendications 1 ou 2, dans lequel le dit acide dicarboxylique aliphatique saturé de polyester i. est choisi parmi des acides dicarboxyliques saturés en $C_2$-$C_{24}$, leurs esters alkyliques en $C_1$-$C_{24}$, leurs sels et des mélanges de ceux-ci.

4. Mélange de liants selon la revendication 3, dans lequel le dit acide dicarboxylique aliphatique saturé dans le polyester i. comprend des mélanges comprenant au moins 50 % en mole d'acide succinique, d'acide adipique, d'acide azélaïque, d'acide sébacique, d'acide brassylique, leurs esters en $C_1$-$C_{24}$ et des mélanges de ceux-ci.

5. Mélange de liant selon l'une quelconque des revendications 1 à 4, dans lequel le dit polyester i. comprend au moins un polyester aliphatique.

6. Mélange de liant selon la revendication 5, dans lequel le dit polyester aliphatique i. est choisi dans le groupe consistant en le poly(1,4-butylène succinate), le poly(1,4-butylène adipate), le poly(1,4-butylène azélate), le poly(1,4-butylène sébacate), le poly(1,4-butylène adipate-co-1,4-butylène succinate), le poly(1,4-butylène azélate-co-1,4-butylène succinate), le poly(1,4-butylène sébacate-co-1,4-butylène succinate), le poly(1,4-butylène succinate-co-1,4-butylène adipate-co-1,4-butylène azélate).

7. Mélange de liant selon la revendication 6, dans lequel le dit polyester aliphatique i. est le poly(1,4-butylène succinate).

8. Mélange de liant selon l'une quelconque des revendications 1 à 8, dans lequel le dit composé présentant deux et/ou de multiples groupes fonctionnels dans le dit agent de réticulation et/ou d'allongement de chaîne iii. est choisi dans le groupe consistant en le diisocyanate de p-phénylène, le diisocyanate de 2,4-toluène, le diisocyanate de 2,6-toluène, le diisocyanate de 4,4'-diphénylméthane, le diisocyanate de 1,3-phénylène-4-chloro, le diisocyanate de 1,5-naphtalène, le diisocyanate de 4,4'-diphénylène, le diisocyanate de 3,3'-diméthyl-4,4'-diphénylméthane, le diisocyanate de 3-méthyl-4,4'-diphénylméthane, le diisocyanate de diphénylester, le diisocyanate de 2,4-cyclohexane, le diisocyanate de 2,3-cyclohexane, le diisocyanate de 1-méthyl-2,4-cyclohexyle, le diisocyanate de 1-méthyl-2,6-cyclohexyle, le bis-(isocyanate cyclohexyl)méthane, le triisocyanate de 2,4,6-toluène, le triisocyanate de 2,4,4'-diphényléther, les polyméthylène-polyphényl-polyisocyanates, le diisocyanate de méthylène diphényle, le triisocyanate de triphénylméthane, le 3,3'-ditolylène-4,4-diisocyanate, le 4,4'-méthylènebis (2-méthyl-phénylisocyanate), le diisocyanate d'hexaméthylène, le diisocyanate de 1,3-cyclohexylène, le diisocyanate de 1,2-cyclohexylène et les mélanges de ceux-ci.

9. Mélange de liant selon la revendication 9, dans lequel le dit composé présentant deux et/ou de multiples groupes fonctionnels dans le dit agent de réticulation et/ou d'allongement de chaîne iii. est le 4,4'-diphénylméthane-diisocyanate.

10. Mélange de liant selon l'une quelconque des revendications 1 à 10, dans lequel le dit composé contenant du silicium iv. est choisi dans le groupe consistant en des organosilanes présentant une formule générale choisie parmi :

$$(RO)_3SiC_nH_{2n}S_mC_nH_{2n}Si(OR)_3 \qquad (I)$$

$$(RO)_3SiC_nH_{2n}X \qquad (II)$$

$$(RO)_3SiC_nH_{2n}S_mY \qquad (III)$$

dans lequel R représente un groupe alkyle présentant de 1 à 4 atomes de carbone, les trois R étant identiques ou différents, « n » représente un nombre entier de 1 à 6, « m » représente un nombre entier de 1 à 6, X représente un groupe mercaptan, un groupe amine, un groupe vinyle, un groupe nitroso, un groupe imide, un atome de chlore ou un groupe époxy ; et Y représente un groupe cyanure, un groupe N,N-diméthylthiocarbamoyle, un groupe mercaptobenzotriazole ou un groupe méthacrylate.

**11.** Procédé de fabrication de panneaux de fibres de bois comprenant les étapes de :

a) préparation d'un mélange homogène en mélangeant :

- 5-20 % en poids de la composition de liant selon l'une quelconque des revendications 1 à 11 ;
- 80-95 % en poids de fibre de bois, ce pourcentage étant déterminé sur la base du poids de la fibre de bois sèche ;

b) application d'une pression de 40-100 kg/cm$^2$ et une température de 150-200 °C au mélange homogène dans l'étape a) dans un moule pendant une durée inférieure à 20 minutes, pour obtenir un pré-panneau ; et
c) démoulage du pré-panneau issu de l'étape b) et refroidissement de celui-ci à température ambiante sous pression atmosphérique pendant une durée inférieure à 20 minutes.

**12.** Panneau de fibre de bois comprenant le mélange de liant selon l'une quelconque des revendications 1 à 11 présentant une épaisseur comprise entre 9 et 10 mm et une densité dans la plage allant de 650 à 975 kg/m$^3$, **caractérisé par** une stabilité dimensionnelle et une résistance à l'eau < 50 %, mesurées par gonflement dans de l'eau après 24 heures selon la norme EN 317:1994, et par une résistance mécanique à la traction comprise entre 20 et 35 MPa, une déformation à rupture comprise entre 1 et 2 % et un module élastique supérieur à 1 700 MPa, dans lequel ladite résistance mécanique à la traction, ladite déformation à la rupture et ledit module élastique sont déterminés selon la norme UNI EN 310:1994 en utilisant des échantillons de 2 cm de large et présentant un rapport longueur/épaisseur= 15.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007243782 A

- EP 0262537 A2

**Non-patent literature cited in the description**

- *CHEMICAL ABSTRACTS,* 24801-88-5

- *CHEMICAL ABSTRACTS,* 2530-83-8